# EUROPEAN PATENT APPLICATION

(11) **EP 0 613 308 A2**
(43) Date of publication of application: **31.08.1994**
(21) Application number: 94107455.1
(22) Date of filing: 12.04.1988
(51) Int. Cl.: H04N 9/31

(54) **Projection-type color display device**

(30) Priority: 14.04.1987 JP 91314/87; 16.11.1987 JP 288647/87
(62) Divisional of application: 88105812.7
(71) Applicant: SEIKO EPSON CORPORATION, Shinjuku-ku Tokyo-to (JP)
(72) Inventor: Yajima, Akitaka, Suwa-shi, Nagano-ken (JP); Nakamura, Junichi, Suwa-shi, Nagano-ken (JP)
(74) Representative: Blumbach Weser Bergen Kramer Zwirner Hoffmann Patentanwälte

(57) **Abstract**

A projection-type color display device comprises light source means emitting three light beams, each beam being of one of the three primary colors, a first, a second and a third liquid crystal light valve (8B, 8G, 8R) of an active matrix type, each arranged to modulate a respective one of said liquid crystal light beams so as to form modulated light beams containing images in the three primary colors, and each including a light shielding layer on one side of a liquid crystal layer, dichroic means (9) for synthesizing said images, said dichroic means reflecting the modulated light beams from said second and third liquid crystal light valves and transmitting the modulated light beam from said first liquid crystal light valve, wherein the images included in the modulated light beams from the second and third liquid crystal light valves are laterally inverted with respect to that from the first liquid crystal light valve so as to compensate for the image inversion caused by reflection by said dichroic means, and driving means arranged to drive said liquid crystal light valves by scanning their matrix arrangements. Each of said liquid crystal light valves is arranged to have its light shielding layer facing the light incident side. In order to compensate for the lateral inversion of the images from the second and third liquid crystal light valves with respect to that of the first liquid crystal light valve, said driving means is arranged such that the scanning direction of said second and third liquid crystal light valves is reversed with respect to that of said first liquid crystal light valve.

## Description

The present invention relates to a projection-type color display device which uses a plurality of light valves for forming and projecting picture images.

A projection-type color display device according to the prior art portion of claim 1 is disclosed in the document International Symposium of the Society for Information Display, Digest of Technical Papers, 1986, pages 375-378, S. Morozumi et al, "LCD Full-Color Video Projector". In this prior art, light from a halogen lamp or a metal-halide lamp is separated into three light beams of the primary colors red, green and blue by means of a dichroic mirror. Each light beam is then image modulated by a respective liquid crystal light valve, and the modulated light beams are synthesized by a dichroic mirror group. The synthesized image is projected on a screen by a projection lens.

Another projection-type color display device based on the same principle as the one explained above is disclosed in the document EP-A-0 266 184 (prior art within the terms of Art. 54(3) EPC).

In the prior art, one of the three liquid crystal light valves should be reversed in order to make the device compact for synthesizing images so that the colored light beams enter from the side of the substrate on which thin-film transistors are integrated. This results in a deterioration of the characteristics of the thin-film transistors and that of the picture quality, such as the contrast ratio.

It is accordingly an object of the present invention to eliminate the problems of the prior art described above and to provide a compact projection-type color display device, producing bright images with high picture quality and high picture reproducibility.

This object is achieved with a projection-type color display device as claimed.

In accordance with the present invention, the driver circuit is arranged so that only one of the three liquid crystal light valves displays laterally inverted or reflectively symmetric images like a mirror. This enables an image display with a large contrast ratio and a high picture quality without a deterioration of the capability, and a compact structure.

Ways of carrying out the invention are described in detail below with reference to drawings which illustrate only specific embodiments, and in which:
- Fig. 1: is a cross-section of a first embodiment of the present invention,
- Fig. 2: shows the transmittance against wavelength characteristics of dichroic mirrors,
- Fig. 3: is a perspective view showing the positional relationship between the liquid crystal light valves,
- Fig. 4: is a top plan view of the device shown in Fig. 3,
- Fig. 5: is a constructional view showing a part of a liquid crystal light valve,
- Fig. 6: shows the spectral characteristic of a tungsten halogen lamp and that of light emitting from the projetion-type color display device according to the present invention,
- Fig. 7, 8 and 10: are sectional views of alternative embodiments of the present invention,
- Fig. 9: shows the spectral characteristic of a widely-used xenon lamp, and
- Fig. 11: shows the spectral characteristic of a widely-used metal halide lamp.

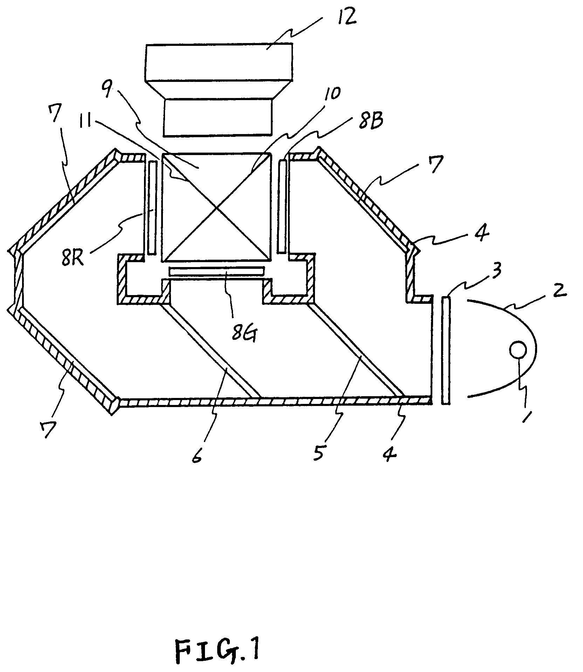

Reference is now first made to Fig. 1, a constructional view showing a first embodiment of the projection-type color display device of the present invention. In this embodiment, a tungsten halogen lamp is utilized as a light source 1 for projection.

The white light emitted from light source 1 is condensed by a parabolic mirror 2. Heat rays of the infrared region are cut by heat ray cut filter 3, and, thus, only the visible radiation is emitted into a dichroic mirror group and segregated into different colors. For condensing the light, a combination of spherical mirrors and condensor lenses or an ellipsoidal reflector can be utilized. The condensed light has almost parallel rays. However, the rays not being completely parallel, the longer the optical length of a light beam is, the less the quantity of light is.

The dichroic mirror group consists of a light guide 4, a blue light reflection dichroic mirror 5, a green light reflection dichroic mirror 6 and reflection mirrors 7. Light guide 4 is a tube having an opening of a size corresponding to the effective image area of each of liquid crystal light valves explained later. Each colored light beam is guided to a respective light valve. The internal surfaces of light guide 4 except for reflection mirrors 7 are planished with aluminum by vacuum deposition for improving the reflectance. This light guide 4 guides the colored light beams as scattered light to the liquid crystal light valves 8B, 8G, 8R to make the light brighter. It also serves to stop the light oozing out and to fix the mirrors.

At first, blue light reflection dichroic mirror 5 reflects the blue light (colored light having wavelengths of about 500 nm and less) and transmits the light of other colors (yellow light). The blue light is reflected a second time by reflection mirror 7 to enter into blue modulation liquid crystal light valve 8B.

The colored light transmitted through blue reflection dichroic mirror 5 impinges on green light reflection dichroic mirror 6 which reflects green light (colored light having wavelengths of about 500 nm to 590 nm) but transmits the other colored light (colored light having wavelengths of about 590 nm and longer). The reflected green light enters into green modulation liquid crystal light valve 8G.

The red light transmitted through green light reflection dichroic mirror 6 is reflected twice by reflection mirrors 7 to enter into red modulation liquid crystal light valve 8R.

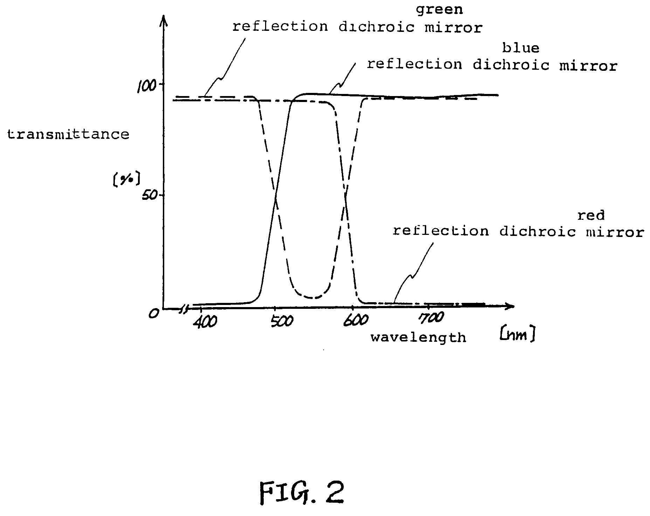

Reference is next made to Fig. 2 showing the transmittance against wavelength characteristic of blue light reflection dichroic mirror 5 and green light reflection dichroic mirror 6.

Each colored light is modulated by a corresponding one of the liquid crystal light valves 8R, 8G and 8B, to which signals for the respective colors, red, green and blue, are applied. The modulated colored light beams are then synthesized by dichroic prisms 9 and magnified for projection by a projection lens 12.

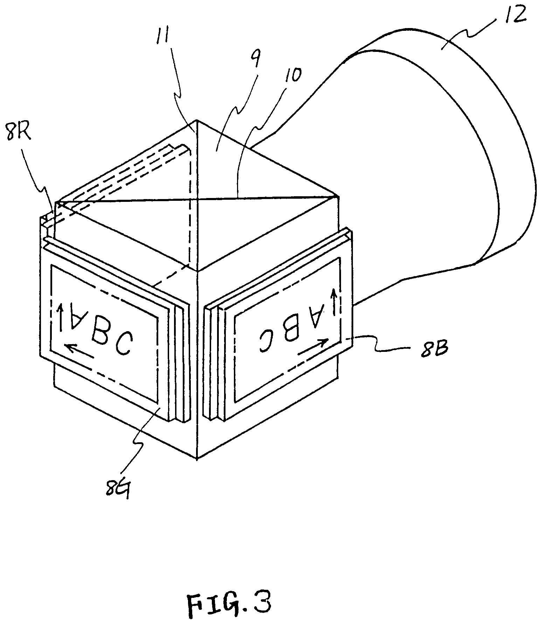

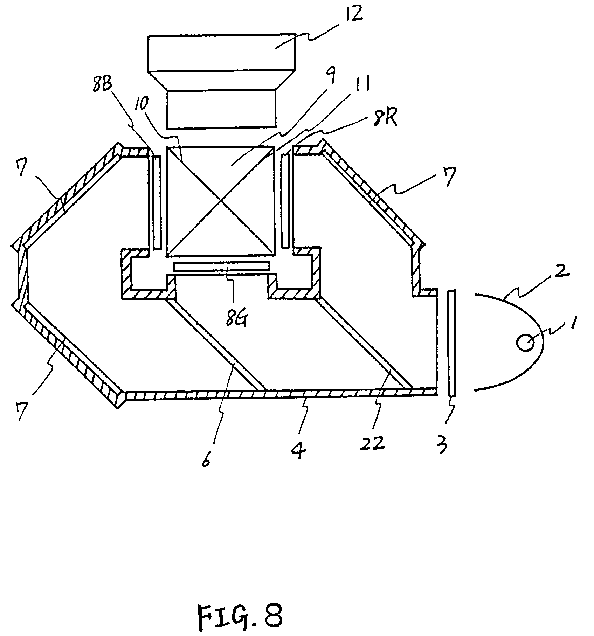

As shown in Fig. 3, four right-angled dichroic prisms 9 are arranged so that a red reflection surface 10 crosses a blue reflection surface 11 at a right angle. A reflection layer (dielectric multi-layer film) is vapor-deposited on each of the two surfaces of each prism forming the right angle of the right-angled prism. The four right-angled prisms are put together by an optical bonding agent. The spectral characteristics of surfaces 10 and 11 is the same as that of the red light reflection dichroic mirror 22 (Fig. 8) and that of the blue light reflection dichroic mirror 5 (Fig. 1) as shown in Fig. 2, respectively.

Among the colored light beams modulated by the liquid crystal light valves, the red light beam and the blue light beam are reflected by the red reflection surface 10 and the blue reflection surface 11 of dichroic prisms 9, respectively, whereas green light is transmitted through the prisms. Then, the red, green and blue light beams are synthesized and enter into projection lens 12. In this process, images formed on the three liquid crystal light valves are synthesized into a single colored image and are projected onto a screen by a single projection lens 12 by suitably adjusting the optical and positional relation among the three liquid crystal light valves , viewing from the side of the projetion lens 12. Therefore, displays without color drifts even around the displayed image achieving a high saturation due to a perfect additive mixture of color stimuli by each pixel can be obtained.

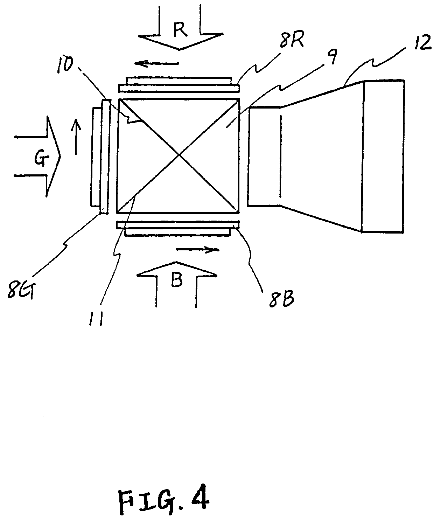

Next, the relation between the liquid crystal light valves and the image on the screen will be described in detail referring to Figs. 3 and 4. In general, images are displayed on the screen from left to right and from top to bottom. Each color modulation liquid crystal light valve 8R, 8G and 8B should display in the directions indicated by arrows in the Figs. 3 and 4. The reason is that the image is inverted (turned upside down and laterally inverted) by projection lens 12 and the images of the red modulation liquid crystal light valve 8R and of the blue modulation liquid crystal light valve 8B are laterally inverted while being reflected by dichroic prisms 9. In other words, the images of all of the three liquid crystal light valves are inverted upside down with respect to the image on the screen, but only the image of the green modulation liquid crystal light valve 8G is additionally laterally inverted. This condition could be achieved by using as the green modulation liquid crystal light valve 8G a light valve like the red modulation liquid crystal light valve 8R or the blue modulation liquid crystal light valve 8B but turned over (turned by 180° around an axis perpendicular to the plane of the drawing in Fig. 4). However, as will be explained below, the properties of such turned light valve would be deteriorated, and thus, this way is not practicable.

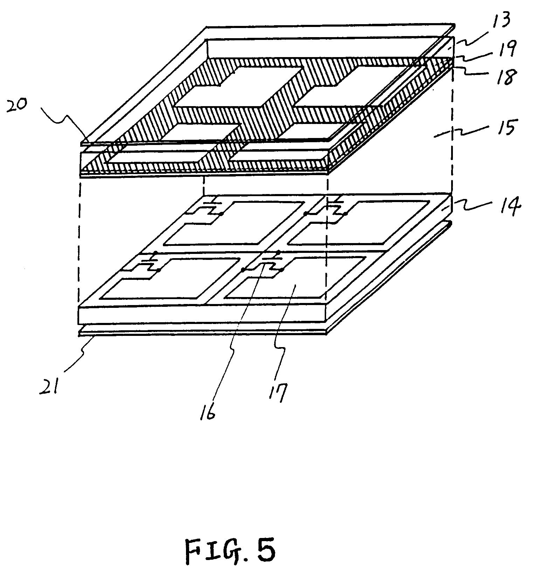

The construction of an active matrix type liquid crystal light valve is schematically shown in Fig. 5. A space between a glass substrate 13 and a fused quartz substrate 14 is filled with a liquid crystal 15. On substrate 14 thin-film transistors 16 and element electrodes 17 are formed. Each element electrode 17 is coupled to one of the thin-film transistors 16. A common electrode 18 and a protection layer or mask 19 for cutting off light are formed on glass substrate 13. An upper polarization plate 20 and a lower polarization plate 21 transmit light with a specific plane of polarization only. Each thin-film transistor 16 and the element electrode 17 connected to it define one pixel.

Thin-film transistors 16 are driven by a control signal voltage (not shown) to bring liquid crystal 15 of respective pixels into an ON condition or an OFF condition to achieve the function of a shutter for controlling the light. However, when light enters into a thin-film transistor 16 in this condition, the ON-OFF ratio of the transistor is changed, resulting in a deterioration of contrast in the image produced by the liquid crystal light valve. The light entering from the side of the glass substrate 13 is prevented from illuminating a thin-film transistor by protection layer 19 in order to achieve a display of high picture quality, A protection layer on substrate 14 to prevent thin-film transistors from being illuminated might solve this problem but would induce other problems. A layer formed on substrate 14 for cutting-off light would have to be a fairly thick metallic film in order to achieve a sufficient cutting-off effect. Forming transistors on such a metallic film is difficult and thus, the yield rate would be low and the production cost much higher due to the necessity of extra process steps. Contrary to that, if such layer is formed on glass substrate 13, the production rate of transistors is not influenced and the production cost is low.

In accordance with the present invention, in order not to utilize as the green modulation liquid crystal light valve 8G, a light valve of the same type as the red modulation liquid crystal light valve 8R or the blue modulation liquid crystal light valve 8B, but turned as mentioned before, the driver circuit is constructed such that only the green modulation liquid crystal light valve 8G displays laterally inverted images like a mirror. In this manner, high picture quality images with a large contrast ratio can be displayed.

The driver circuit can be disposed within the liquid crystal light valve or can be attached to its outer frame. The liquid crystal light valve producing a laterally inverted image display such as the green modulation liquid crystal light valve 8G can be formed by only performing a mask correction when a built-in type is applied or by only changing the connections when the circuit is attached to the outer frame.

The liquid crystal 15 is a twisted nematic (TN) liquid crystal having its double refraction ratio Δn preferably selected to on optimum value in accordance with the respective color of light in order to obtain a high contrast ratio.

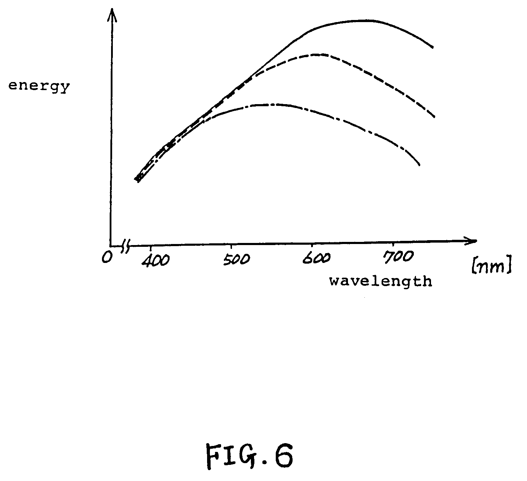

The distance between red modulation liquid crystal light valve 8R and light source 1 is longer than that between blue modulation liquid crystal light valve 8B or green modulation liquid crystal light valve 8G and light source 1, i.e. the red light is damped more than the blue light and the green light. When a tungsten halogen lamp having a spectral characteristic as shown in Fig. 6 by a solid line, a low color temperature of about 3,000 K and a large luminous intensity of red light is utilized as light source 1, the energy of the red light is decreased and the spectral characteristic of the displayed image is turned to be as depicted in Fig. 6 by a dotted line, resulting in a display of a high color temperature of about 6,000 K. A filter for maintaining color balance is not necessary. Further, an image of high saturation with an excellent color reproducibility can be provided which is sufficiently suitable for the standard for broadcasting and communication such as NTSC, PAL and SECAM.

In short, when a tungsten halogen lamp is utilized as light source 1, a well-balanced image display of high picture quality can be achieved by the dichroic mirror group of the present invention which performs color segregation and provides different optical path lengths for different colors. Besides, the same effect can be obtained by other lamps with large luminous intensity of red light.

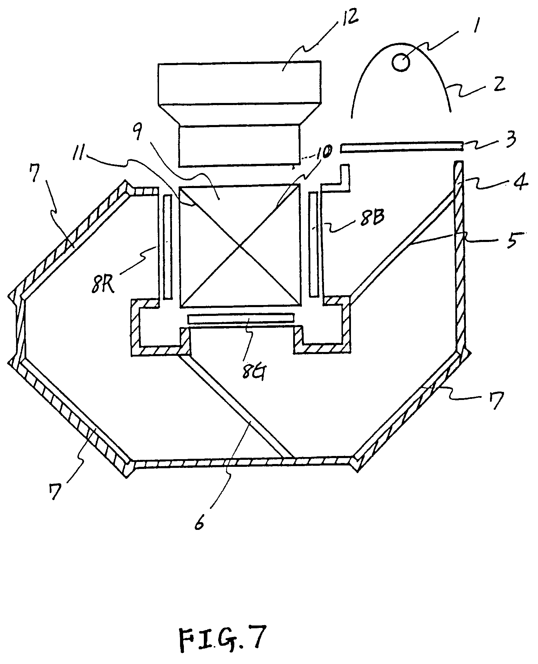

Reference is next made to Fig. 7 showing a second embodiment of the present invention, namely a construction of a projection-type color display device using a tungsten halogen lamp as light source 1 and designed to elevate the color temperature to about 9,300 K, which is the color temperature of white light displayed by a cathode-ray tube at present.

As can be seen in Fig. 7, this display device consists of the same parts with the same characteristics as those of the first embodiment. However, the optical path length between light source 1 and each liquid crystal light valve becomes larger in the order, blue modulation liquid crystal light valve 8B, green modulation liquid crystal light valve 8G and red modulation liquid crystal light valve 8R. Therefore, the damping in the displayed image becomes bigger in the order of blue light, green light and red light resulting in an extremly well-balanced image with high saturation and a flat spectral characteristic as shown by a one-dot-and-dash line in Fig. 6 and a white color temperature of about 9,000 K.

When a tungsten halogen lamp is utilized in the present invention, it is most effective to minimize the optical path length of the blue light. Thus, if dichroic mirrors are arranged so that the optical path length of the colored light becomes longer in the order, blue light, green light and red light, the desired effect can be obtained.

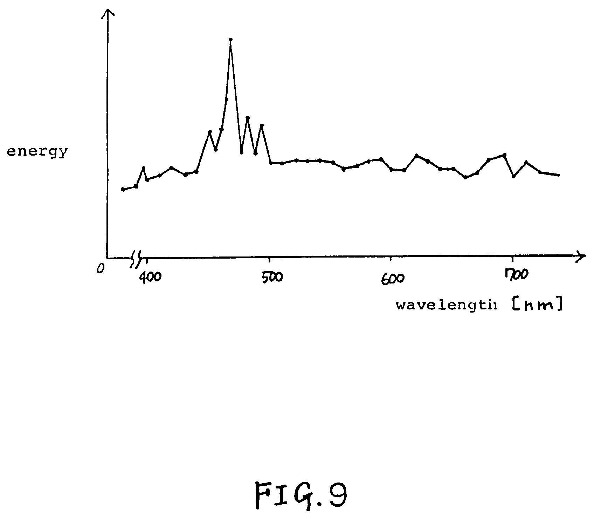

Reference is next made to Fig. 8, showing a construction of a third embodiment of a projection-type color display device of the present invention. A xenon lamp is used as a light source 1 for projection. Fig. 9 shows the spectral characteristic of a widely-used xenon lamp having a peak within the range of blue light wavelengths. As can be seen in Fig. 9, the xenon lamp has a large luminous intensity of blue light.

In the same manner as in the first embodiment, the visible radiation condensed by a parabolic mirror 2 and transmitted through a heat ray cutting filter 3 enters into light guide 4 where it is segregated into different colors by a dichroic mirror group. At first, red light (with wavelengths of about 590 nm and longer) is reflected by a red light reflection dichroic mirror 22. Then green light is reflected by a green light reflection dichroic mirror 6. The residual transmissive light is blue light. The colored light beams are guided to liquid crystal light valves 8R, 8G and 8B by the light guide 4 and reflection mirrors 7, respectively. The transmittance against wavelength characteristic of the dichroic mirrors is shown in Fig. 2.

Compared to the embodiment of Fig. 1, in this embodiment the red modulation liquid crystal light valve 8R and the blue modulation liquid crystal light valve 8B have been exchanged, while the green modulation light valve 8G displays laterally inverted images in the same way as in the first embodiment. Dichroic prisms 9 are arranged such that a red reflection surface 10 and a blue reflection surface 11 correspond to the respective liquid crystal light valves.

Image display can be carried out by projection by use of a projection lens 12 in quite the same way as in the first embodiment, except for the order of color segregation. The blue light has the largest optical path length and thus the highest degree of damping, so that a well-balanced color image with a decreased luminous intensity of blue light can be projected.

The same effect can be obtained if other lamps having a large luminous intensity in the wavelength range of blue light are used as light source 1 for projection.

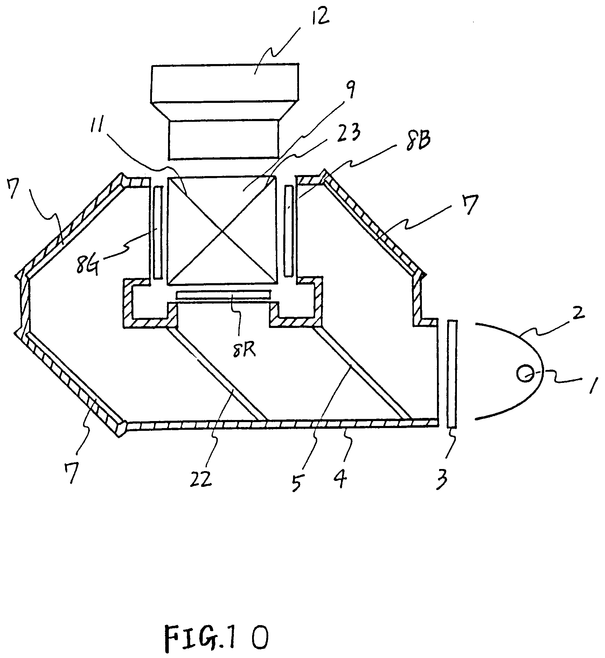

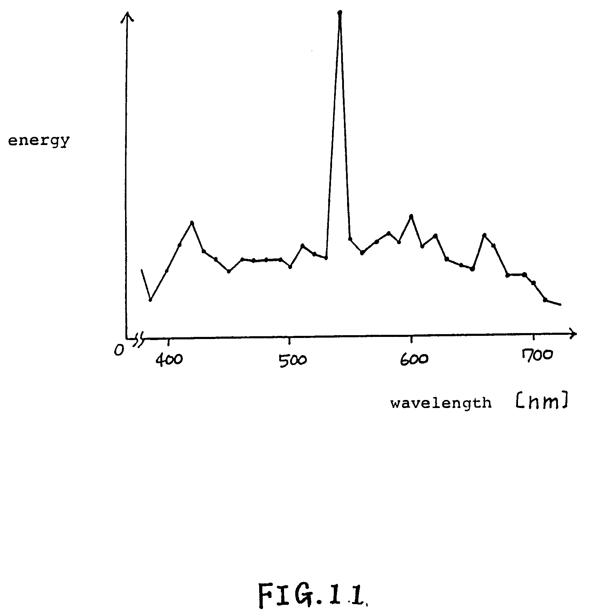

Reference is next made to Fig. 10, showing the construction of a fourth embodiment of the projection-type color display device of the present invention. A metal halide lamp is utilized as light source 1 for projection in this case. Fig. 11 shows the spectral characteristic of a widely-used metal halide lamp having a peak within the range of green light wavelengths. As can be seen in Fig. 11, the metal halide lamp has a large luminous intensity of green light, so that the viewer feels green light.

The visible light condensed by a parabolic mirror 2 and transmitted through heat ray cutting filter 3 in the same manner as in the first to third embodiments enters into a light guide 4 and is segregated into different colors by a dichroic mirror group. First, blue light is reflected by a blue light reflection dichroic mirror 5. Then red light is reflected by a red light reflection dichroic mirror 22. The residual transmissive light is green light. The colored light beams are guided to liquid crystal light valves 8B, 8R, 8G by light guide 4 and reflection mirrors 7, respectively.

In this case, it is only the red modulation liquid crystal light valve 8R which instead of the green modulation liquid crystal light valve in the previous embodiments displays laterally inverted images like a mirror.

Dichroic prisms 9 are arranged such that a blue reflection surface 11 crosses a green reflection surface 23 at a right angle, and only red light can be transmitted therethrough. The transmittance against wavelength characteristic of each surface is the same as shown in Fig. 2. The principle of displaying an image by projection using a projection lens 12 is the same as with the previous embodiments.

In this case, the green light has the longest optical path and the highest degree of damping, so that a well-balanced color image with reduced luminous intensity of green light can be displayed. Further, if a kind of metal halide lamp also having a large luminous intensity of red light showing a peak within the range of red light wavelengths is utilized, well-balanced colored images with high saturation can be obtained without a filter compensation of intensity of each colored light by rearranging the construction shown in Fig. 10 in the same way as shown in Fig. 7 to make the optical path length larger in the order, blue light, red light and green light, with the length for green light being longest and that for blue light being shortest.

The same effect can be obtained if another type of lamp having a large luminous intensity in the wavelength range of green light is used as light source 1 for projection.

## Claims

1. A projection-type color display device comprising
light source means (1 - 7) emitting three light beams, each beam being of one of the three primary colors,
a first, a second and a third liquid crystal light valve (8B, 8G, 8R) of an active matrix type, each arranged to modulate a respective one of said liquid crystal light beams so as to form modulated light beams containing images in the three primary colors, and each including a light shielding layer on one side of a liquid crystal layer,
dichroic means (9) for synthesizing said images, said dichroic means reflecting the modulated light beams from said second and third liquid crystal light valves and transmitting the modulated light beam from said first liquid crystal light valve, wherein the images included in the modulated light beams from the second and third liquid crystal light valves are laterally inverted with respect to that from the first liquid crystal light valve so as to compensate for the image inversion caused by reflection by said dichroic means, and
driving means arranged to drive said liquid crystal light valves by scanning their matrix arrangements,
characterized in that
each of said liquid crystal light valves is arranged to have its light shielding layer facing the light incident side and said driving means is arranged such that the scanning direction of said second and third liquid crystal light valves is reversed with respect to that of said first liquid crystal light valve.

2. The projection-type color display device according to claim 1, wherein the primary color of the light beam modulated by said first liquid crystal light valve (8G) is green.
